# EUROPEAN PATENT SPECIFICATION

(11) **EP 0 628 174 B1**
(45) Date of publication and mention of the grant of the patent: **09.09.1998**
(21) Application number: 93905707.1
(22) Date of filing: 01.03.1993
(51) Int. Cl.: G02B 6/32

(54) **CONNECTING DEVICE FOR CONNECTION OF THE END PORTIONS OF OPTICAL FIBRES**
VERBINDUNGSVORRICHTUNG ZUM VERBINDEN DER ENDSTÜCKE VON OPTISCHEN FASERN
DISPOSITIF DE CONNEXION POUR CONNECTER LES EXTREMITES DE FIBRES OPTIQUES

(30) Priority: 28.02.1992 SE 9200596
(43) Date of publication of application: 14.12.1994
(73) Proprietor: NODFELT, Ingvar, S-240 21 Löddeköpinge (SE)
(72) Inventor: NODFELT, Ingvar, S-240 21 Löddeköpinge (SE)
(74) Representative: Roth, Ernst Adolf Michael
(86) International application number: PCT/SE93/00141
(87) International publication number: WO 93/17359

(56) References cited:
- EP-A- 6 662
- DE-C1-39 02 807

## Description

The present invention refers to a connecting device for axial coupling the end portions of optical fibres, in order to provide an optical connection according to the preamble of claim 1.

### Background of the invention

The rapid development of the field of communication has resulted that the need for faster and more reliable transmission media have increased drastically. Optical fibres have revolutionized transmission possibilities. These fibres allow a large number of signals to be transferred in the same fibre and with speeds near that of light. Since the fibre length is limited at fabrication, these have to be connected by means of different connecting devices.

Connecting devices have to connect optical fibres to each other, so that the fibre ends can be located exactly axially right in front of each other. A problem when connecting optical fibres ends to each other is their small diameter, which amounts to some or some tenths of millimetres, while its optical core can have a diameter of 10-50 µm. A deviation of a thousandth of a millimetre therefore results in a coarse deviation, whereby the transmission losses increase drastically. Therefore there are very great demands on the tolerances of the connecting device, which results in complicated designs and high manufacturing costs.

Through the European patent application no. 494980 corresponding to the swedish patent application no : 8903366-6 and to WO-A- 91/06 023, a connecting device for optical fibres is known, which requires specially formed means to centre optical fibres relative to each other.

Previously known are connecting devices according to the British patent GB-2002136, where a spherical lens is used for transfer of light signals, as well as US-4421383, US-46-91985, US-4711518 and US-4770488 for centring and connection of an optical fibre with a lens device. The lens devices in each connecting device are used to transmit the light between two fibre ends. In these documents there are no directions of how the centring of the glass fibre relatively the lens and the coupling house should be achieved.

Moveover EP-A-0 006 662 discloses a connector 20 having two portions, which in one each portion is provided with a housing 21a, which in a bore 37a receives a guide sleeve 23a having a coaxial bore for receiving a plug 43a, which holds a fibre 35a end portion close to, but not in contact with a ball-lens 25a. Further, one end of the guide sleeve 23a is provided with a seat 41a having inclined surfaces, bearing on the ball-lens. Also, one end of said housing bore 37a is arranged with a seat.

A drawback with the connector of EP-A-0 006 662 is the adjustment of the ends of the fibres in each portion of connector to be parallel to the central axis 35a,b. For this purpose each connector portion is arranged with an adjustment screw/bushes and spring 53a, to manually adjust the fibre position. Obviously, the arrangemang of seats and adjusting means can only be used in combination with a ball-lens, which allows certain movements for adjustment.

As the connector is designed for the ball-lenses, only one fibre can be held by each portion of the connector.

Furthermore DE-C1-39 02 807 discloses a light-guide coupling adaptor for surgical laser, including a safety switch, which detects the arrival of lens in coupled position when light guide termination is fully inserted. An outer sleeve 2, securable by a screw cap 12 to a housing 11, receives a coaxial inner sleeve 3 provided with a lens 4, which couples a light source (laser) 10. At the other end of said inner sleeve 3 a helical spring 7 connected to a holder 5 with a locking device 6 is arranged for termination of light-guide. The switch 13 is arranged to detect the completion of the insertion. The device is used in safety devices, specially in laser devices, where the laser safety devices are activated only when the light-guides termination is inserted to a predetermined position in an adaptor. Further, the position of the connector to incoming light is adjusted by means of a screw 11.1 and a holing screw 11.2.

The field of application for the device of DE-C1-39 02 807 do not require an adjustment to align the fibre ends in a correct position, neither it does call for usage of several fibres in the same connector.

The object and essential features of the invention

The object of the invention is to provide a connecting device for very thin optical fibres, which enables a very secure and exact centring and connection of the fibre ends, which makes it possible to connect fibres of different size and which counteracts deformations of the optical fibres at the connection. By means of the connecting device self-centring lenses are obtained, which are used for transmission of light signals between two fibre end portions. In addition the fabrication of the connecting device is simplified and cheapened.

These tasks have been solved in the connecting device of the present invention by the features according to the characterising portion of claim 1.

### Description of the drawings

The invention will be described below with reference to an embodiment shown on the enclosed drawings:

Fig. 1 shows a section through a part of a connecting device according to the invention.

Fig. 2 shows a section analogous to fig. 1 of a modified connecting device.

Fig. 3 shows in reduced scale the connection device shown in fig. 1 in complete form.

Fig. 4 shows a section through a centring means contained in the connecting device.

Fig. 5 shows a bottom view of the centring means according to fig. 4.

### Description of the embodiments

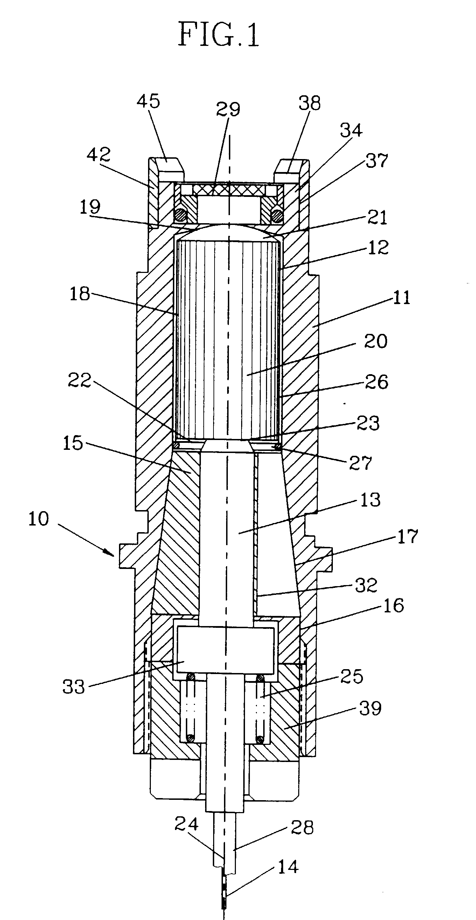

The insertion device 10 shown in fig. 1 consists of a coupling house 11, which mainly comprises a lens 12 for transmission of light signals and a plug 13, which is designed as a holder for one or more optical fibres 14, surrounded by an outer cover 28. The plug 13 is guided in the coupling house 11 by means of a conical guide sleeve 15, provided in a recess 17 designed with corresponding tapering, which is coaxial with the longitudinal axis 24 of the coupling house. The conical recess 17 passes into a cylindric channel 18, which has slightly larger diameter than the lens 12. The channel 18 at the end opposite to the guide sleeve 15 is formed with a ring shaped partially spherical or conical seat 19, which is concentric with the longitudinal axis 24 of the coupling house 11. The plug 13 is of conventional type and can exist in different sizes, why even the guide sleeve 15 is manufactured in different sizes. At the front end of the coupling house 11, ie. the end that is intended to be connected axially with a second connecting device, is formed with a guide dowel 34, the peripheral guide surface 37 of which is coaxial with the longitudinal axis 24 of the coupling house 11. A coupling sleeve 42 is applied with press fit against the guide surface 37 with pins 38 extending from this, and between these pins located recesses 47, and the end surfaces 45 of which pins are perpendicular relative to the longitudinal axis 24 of the coupling house 11, which in turn is coaxial with the optical axis of the connection device.

When connecting two similar connecting devices 9, said pins 38 will be brought into the recesses 47 of the second connection device so that both connecting devices are in the exact axial extension of each other. The fabrication of the coupling house is appropriately carried out by turning, whereby the conical recess 17, the channel 18, the seat 19 and the guide surface 37 are turned at one and the same tooling in the lathe, so that these are absolutely mutually coaxial. The manufacturing process thereby becomes simple and cheap.

The lens 12 comprises a lens body 20, with a front having partially spherical surface 21 and a rear, flat end surface 22, that is perpendicular to the longitudinal axis of the lens. The end surfaces 21 and 22 of the lens are anti-reflex treated to achieve as loss free and free of reflexes transmission as possible. The lens 12 is forced with its partial spherical end against the seat 19, by means of a spring 25 or the like, which spring also acts on the plug 13, which with its front end surface bears against the lens 12 with an even pressure. By giving the lens 12 a play 26 in the lateral direction, this may be centred under the pressure of the plug 13. The mobility of the lens along the seat 19 entails that the end surface 23 of the plug 13 comes to full, plan bearing against the end surface 22 of the lens 12 and thereby also the end surface of the fibre. The lens 12 at its rear end is fixed in the channel by means of a lock ring 27, while its front end 21 is protected against dirt and shock by means of a protection glass 29.

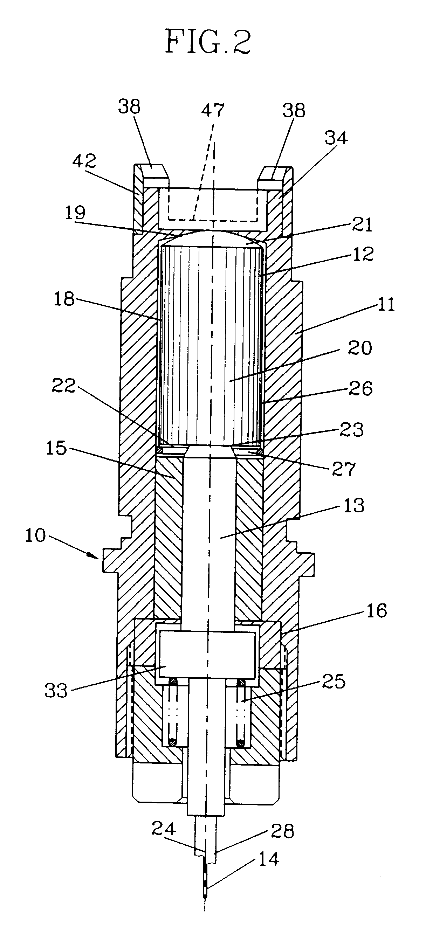

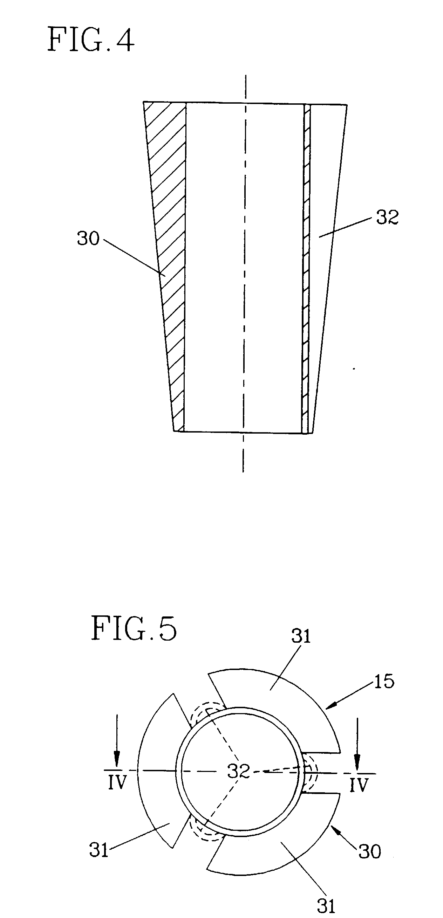

The guide-sleeve 15 comprises a socket 30 that can be cylindrically (according to fig. 2) or conically designed (according to fig. 1). An embodiment of the later is shown in fig. 4 and 5. The socket 30 is formed with resilient sectors 31, connected to each other via thin, material weakened axial portions 32. The socket 30 is designed with a decreasing diameter in direction towards the lens 12. In this embodiment the inner wall surface of the guide sleeve 15 forms the inner guide element of the plug 13, while the outer envelope surface of the sleeve forms its outer guide element. The conical socket 30 on the inside is shaped after the outer form of the plug 13, which in this embodiment is cylindric. The plug 13 is provided with a peripheral flange 33, which forms a stop for the spring 25, the pre-stress of which is controllable by means of a nut 39. At the pressing of the guide sleeve 15 in the conical recess 17 the thin portions 32 bulge outwards, such as is indicated by dashdotted lines in fig. 5, and thus the inner limitation of the sleeve therefore can adapt to the diameter of the plug 13.

In the embodiment shown fig. 2, a connecting device is disclosed in which the protection glass 29 has been taken away and the conical guide-sleeve 15 has been replaced by a cylindric guide-sleeve, whereby even the channel 18 is cylindric. In this embodiment as well the channel wall is coaxial with the seat 19.

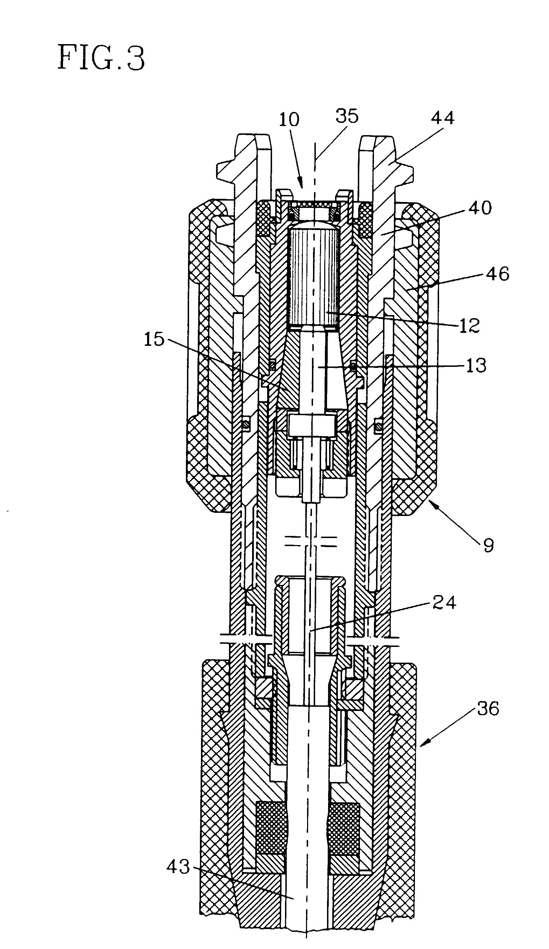

The complete connecting device 9 shown in fig. 3 comprises the insertion device 10 according to fig. 1 or alternatively according to fig. 2, a connection sleeve 40 provided with guide segments 44, provided preferably at the front end 35 of the connecting device 9, a barrel nut 41 or the like, and stress-relieving devices 36 for stress-relief of the optical fibre cable 43.

A connecting device 9 is connected to a second similar connecting device, by means of its pins 38 and guide segments 44 being brought into interaction with each other, ie. they engage each other and form a whole or a partially cylindrical surface, whereupon a connection nut 46 fixes the connecting devices in an axial stationary position.

### Reference numerals

- 9: Connecting device
- 10: Insertion device
- 11: Coupling house
- 12: Lens
- 13: Plug
- 14: Optical fibre
- 15: Guide sleeve
- 16: Accommodation
- 17: Conical recess
- 18: Channel
- 19: Seat
- 20: Lens body
- 21: Lens front surface
- 22: Lens rear end
- 23: Dowel front end
- 24: Longitudinal axis
- 25: Spring
- 26: Play
- 27: Lock ring
- 28: Cover
- 29: Protection glass
- 30: Conical sleeve
- 31: Resilient sector
- 32: Axial portions
- 33: Peripheral flange
- 34: Guide pin
- 35: Front end of the connecting device
- 36: Stress-relief device
- 37: Guide surface
- 39: Nut
- 40: Connection sleeve
- 41: Barrel nut
- 42: Coupling sleeve
- 43: Optical fibre cable
- 44: Guide
- 45: End surface
- 46: Connection nut
- 47: Recess

## Claims

1. A connecting device for axially coupling the end portions of optical fibres (14), to provide an optical connection between said fibres comprising:
- a coupling housing (11) having a longitudinal axis (24) and a channel (18) coaxial with said coupling housing;
- a cylindrical plug (13) inserted in said coupling housing (11), to receive end portions of said optical fibres (14);
- a lens (12) connected to the end of each optical fibre of said plug, and inserted in said channel of the coupling housing; wherein
- the coupling housing (11) further comprises at one end of the channel (18) a ring shaped, partially spherical or conical seat (19) for receiving the front end surface of said lens, which seat being concentric with the longitudinal axis of the coupling housing, and said plug (13) being inserted in a coaxial guide sleeve (15) guided in the coupling housing (11);
*characterized in,*
**that** the lens (12) consists of a substantially cylindrical lens body (20), the front end surface (21) of which is partially spherical and the opposite, rear end surface (22) of which is flat and arranged perpendicular to the longitudinal axis of the lens body, (24),
**in that** said lens body (20) has a diameter substantially smaller than the diameter of said channel (18), so that a space (26) between the lens body (20) and the inner wall of said channel (26) is provided, and in **that** the plug (13) has a front end surface which is perpendicular to its longitudinal axis, and is pressed to bear against the flat rear end surface (22) of the lens body (20) by means of a spring (25) so that the partially spherical front end surface of the lens body, is pressed to bear against the seat, and due to the play of the lens body in said space (26) and the pressure of the plug a self centring of the axes of the lens (12), the plug (13) and the coupling housing (11) relative other is achieved.

2. A connecting device according to claim 1,
**characterized in,**
**that** the outer surface of the guide sleeve (15) is either conical, with a diameter decreasing in direction towards the lens (12) in said channel, or cylindrical, and
**that** the guide sleeve (15) is inserted in an axial recess (17) provided in the coupling housing (11) designed with complementary form with respect to said outer surface which recess is concentric with the ring shaped seat (19) of the coupling housing.

3. A connecting device according to claim 1 or 2,
**characterized in,**
**that** the plug (13) is designed for reception and fixation of several optical fibres (14) in exact relative mutual positions.

4. A connecting device according to claim 1, 2 or 3,
**characterized in,**
**that** the front end of the coupling housing (11) is designed with axial and radial guide dowels (34) provided for interaction with corresponding guide dowels at a second connecting device axially interconnectable with the connecting device.

## Patentansprüche

1. Kupplungsvorrichtung zur axialen Verbindung von Endstücken von optischen Fasern (14), um eine optische Verbindung zwischen diesen Fasern zu schaffen, bestehend aus:
einem Kupplungsgehäuse (11) mit einer Längsachse (24) und einem mit diesem Kupplungsgehäuse koaxialen Kanal (18);
einem in dieses Kupplungsgehäuse (11) eingefügten zylindrischen Stecker (13) zur Aufnahme der Endstücke dieser optischen Fasern (14);
eine mit dem Ende jeder optischen Faser des Steckers verbundenen und in den Kanal des Kupplungsgehäuses eingefügten Linse (12), wobei
das Kupplungsgehäuse (11) an einem Ende des Kanals (18) weiterhin einen ringförmigen, teilweise sphärischen oder konischen Sitz (19) umfasst zur Aufnahme der vorderen Endoberfläche der Linse, der Sitz konzentrisch zur Längsachse des Kupplungsgehäuses ist und der Stecker (13) in eine koaxiale Führungsmuffe (15) eingefügt ist, die im Kupplungsgehäuse (11) geführt ist;
**dadurch gekennzeichnet,**
dass die Linse (12) aus einem im wesentlichen zylindrischen Linsenkörper (20) besteht, dessen vordere Endoberfläche teilweise sphärisch ist und desen gegenüberliegende rückwärtige Endoberfläche (22) eben und rechtwinklig zur Längsachse (24) des Linsenkörpers ausgerichtet ist;
**und dadurch**
dass der Linsenkörper (20) einen im Wesentlichen kleineren Durchmesser als der Durchmesser des Kanals (18) aufweist, so dass ein Ringspalt zwischen dem Linsenkörper (20) und der inneren Wand (26) des Kanals vorgesehen ist,
**und dadurch,**
dass der Stecker (13) eine vordere Endoberfläche aufweist, die rechtwinklig zu seiner Längsachse verläuft und wobei diese mittels einer gegen das ebene rückwärtige Ende (22) angreifenden Feder (25) angedrückt wird, um das teilweise sphärische vordere Oberflächenende des Linsenkörpers gegen den Sitz stützend so anzudrücken, dass aufgrund des Spiels des Linsenkörpers in der Ringspalt (26) und des Druckes des Steckers eine Selbstzentrierung der Achsen der Linse (12), des Steckers (13) und des Kupplungsgehäuses (11) in Beziehung zueinander erreicht wird.

2. Kupplungsvorrichtung nach Anspruch 1, **dadurch gekennzeichnet**, dass die äussere Oberfläche der Führungsmuffe (15) entweder konisch ist, mit einem in Richtung der Linse (12) im Kanal (15) abnehmenden Durchmesser, oder zylindrisch,
**und dadurch**
dass die Führungsmuffe (15) in eine im Kupplungsgehäuse (11) vorgesehene axiale Aufnahme (17) eingefügt ist und mit einer ergänzenden Form ausgestaltet ist in Bezug auf die äussere Oberfläche, wobei die Aufnahme zum ringförmigen Sitz (19) des Kupplungsgehäuses konzentrisch ist.

3. Kupplungsvorrichtung nach Anspruch 1 oder 2, **dadurch** **gekennzeichnet,** dass der Stecker (13) zur Aufnahme und Fixierung mehrerer optischer Fasern (14) in genau wechselseitig entsprechenden Positionen vorgesehen ist.

4. Kupplungsvorrichtung nach Anspruch 1, 2 oder 3, **dadurch gekennzeichnet,** dass das vordere Ende des Kupplungsgehäuses (11) mit axialen und radialen Führungsdübeln (34) ausgestattet ist zur Interaktion mit entsprechenden Führungsdübeln an einer zweiten Kupplungsvorrichtung, die axial mit der Kupplungsvorrichtung verbindbar ist.

## Revendications

1. Dispositif de connexion pour coupler axialement les extrémités de fibres optiques (14), afin d'obtenir une connexion optique entre lesdites fibres, comprenant :
- une douille de couplage (11) présentant un axe longitudinal (24) et un canal (18) coaxial à ladite douille de couplage ;
- un tampon cylindrique (13) inséré dans ladite douille de couplage (11) et destiné à recevoir les extrémités desdites fibres optiques (14) ;
- une lentille (12) reliée à l'extrémité de chaque fibre optique dudit tampon et insérée dans ledit canal de la douille de couplage, dans laquelle :
la douille de couplage (11) comprend en outre, à une extrémité du canal (18), un siège annulaire partiellement sphérique ou conique (19), destiné à recevoir la surface d'extrémité avant de ladite lentille, ledit siège étant concentrique à l'axe longitudinal de la douille de couplage et ledit tampon (13) étant inséré dans un manchon de guidage coaxial (15) logé dans la douille de couplage (11) ;
caractérisé en ce que la lentille (12) consiste en un corps de lentille sensiblement cylindrique (20) dont la surface d'extrémité avant (21) est partiellement convexe et la surface d'extrémité arrière opposée (22) est plane et perpendiculaire à l'axe longitudinal (24) du corps de lentille,
et en ce que ledit corps de lentille (20) présente un diamètre sensiblement inférieur à celui dudit canal (18), de manière à définir un espace (26) entre le corps de lentille (20) et la paroi interne dudit canal (18) et en ce que le tampon (13) présente une surface d'extrémité avant perpendiculaire à son axe longitudinal et plaquée contre la surface d'extrémité arrière (22) du corps de lentille (20) au moyen d'un ressort (25) de sorte que la surface d'extrémité avant partiellement convexe du corps de lentille soit plaquée contre le siège et de manière à obtenir, grâce au jeu du corps de lentille dans ledit espace (26) et à la pression exercée par le tampon, un autocentrage des axes de la lentille (12), du tampon (13) et du carter de jonction (11) les uns par rapport aux autres.

2. Dispositif de connexion selon la revendication 1, caractérisé en ce que la surface externe du manchon de guidage (15) est soit conique, avec un diamètre qui diminue en direction de la lentille (12) placée dans ledit canal, soit cylindrique, et en ce que le manchon de guidage (15) est inséré dans un logement axial (17) ménagé dans la douille de couplage (11) et affectant une forme complémentaire à ladite surface externe, lequel logement étant concentrique au siège annulaire (19) de la douille de couplage.

3. Dispositif de connexion selon la revendication 1 ou 2, caractérisé en ce que le tampon (13) est conçu pour recevoir et fixer plusieurs fibres optiques (14) dans des positions relatives précises.

4. Dispositif de connexion selon la revendication 1, 2 ou 3, caractérisé en ce que l'extrémité avant de la douille de couplage (11) est dotée d'un tourillon de guidage axial et radial (34) prévu pour coopérer avec le tourillon de guidage correspondant d'un second dispositif de connexion apte à être relié axialement au premier dispositif de connexion.
